# FASCICULE DE BREVET EUROPEEN

(11) **EP 3 408 567 B1**
(45) Date de publication et mention de la délivrance du brevet: **05.08.2020**
(21) Numéro de dépôt: 17701529.4
(22) Date de dépôt: 27.01.2017
(51) Int. Cl.: F16L 21/035, F16L 7/02, F16L 25/14, E04D 13/04

(54) **BAGUE D'ÉTANCHÉITÉ ET ASSEMBLAGE DE CONDUITS INCLUANT CETTE BAGUE**
DICHTUNGSRING UND RÖHRENANORDNUNG MIT DIESEM RING
SEALING RING AND ASSEMBLY OF DUCTS INCLUDING SAID RING

(30) Priorité: 29.01.2016 FR 1650720
(43) Date de publication de la demande: 05.12.2018
(73) Titulaire: Iftissen, Gérard, 38410 Saint Martin d'Uriage (FR)
(72) Inventeur: Iftissen, Gérard, 38410 Saint Martin d'Uriage (FR)
(74) Mandataire: Casalonga
(86) Numéro de dépôt international: PCT/EP2017/051771
(87) Numéro de publication internationale: WO 2017/129746

(56) Documents cités:
- CN-A- 104 763 809
- DE-U1- 29 906 821
- DE-U1- 29 911 322
- FR-A- 1 448 157
- US-A1- 2002 153 725

## Description

La présente invention concerne le domaine des dispositifs servant à l'évacuation de l'eau de pluie, en particulier des toits des bâtiments et des terrasses.

Généralement, les dalles plates de toits et de terrasses présentent des trous qui sont équipés de portions de conduits qui les traversent et qui présentent une extrémité supérieure reliée à l'étanchéité supérieure des dalles. L'extrémité inférieure de ces portions de conduits est engagée dans l'extrémité supérieure de conduits verticaux d'évacuation reliés à des réseaux d'évacuation.

Le brevet US-5966884 décrit un dispositif d'étanchéité qui comprend un anneau souple d'étanchéité installé entre un épaulement de l'extrémité inférieure d'une portion de conduit et une bague rigide reliée à cet épaulement par des vis. Après mise en place dans un conduit vertical, les vis sont manœuvrées pour rapprocher la bague rigide de l'épaulement et ainsi déformer l'anneau d'étanchéité vers l'extérieur et le contraindre en appui contre la face intérieure du conduit vertical d'évacuation. Ce dispositif d'étanchéité nécessite une réalisation particulière de l'extrémité inférieure de la portion de conduit et nécessite un outil de grande longueur, difficile à accoupler aux têtes des vis et à manœuvrer sur les lieux d'installation.

Le brevet FR 1 448 157 décrit un dispositif d'étanchéité qui comprend un anneau pris entre un conduit extérieur et un conduit intérieur et présentant un épaulement intérieur en appui sur l'extrémité du conduit intérieur et qui comprend une lèvre annulaire reliée à l'anneau par des branches élastiques et venant en appui sur l'extrémité du conduit extérieur. La déformation élastique de la partie élastique, qui détermine la force d'appui de la lèvre annulaire sur l'extrémité du conduit intérieur, est limitée par le fait que l'épaulement intérieur de l'anneau vient en appui contre un épaulement intérieur du conduit extérieur.

La présente a pour objet de créer une étanchéité entre deux conduits, de façon plus simple et adaptable.

Selon un mode de réalisation, il est proposé une bague d'étanchéité selon la revendication 1, qui comprend, axialement, une partie principale et une partie secondaire, reliées par une portion intermédiaire affaiblie sécable sous l'effet d'un effort axial appliqué entre la partie principale et la partie secondaire.

La partie principale comprend un manchon annulaire d'étanchéités extérieure et intérieure et un épaulement extérieur en saillie d'appui axial du côté de la portion sécable, aménagé à l'extrémité du manchon annulaire d'étanchéité, axialement éloigné de la portion sécable.

En outre, la partie secondaire comprend un épaulement intérieur en saillie d'appui axial du côté de la partie sécable.

Ladite portion sécable peut présenter au moins une section réduite par rapport au manchon annulaire d'étanchéité et/ou au moins une fente.

Ladite partie secondaire peut comprendre une portion annulaire secondaire reliée au manchon annulaire d'étanchéité par ladite portion sécable, ledit épaulement intérieur étant aménagé à l'extrémité de portion annulaire secondaire, opposée à ladite portion sécable.

Ladite portion annulaire secondaire peut s'étendre dans le prolongement dudit manchon annulaire d'étanchéité.

Ledit épaulement intérieur peut être pourvu d'une rainure annulaire ouverte axialement du côté de la partie principale.

Ledit manchon annulaire d'étanchéité peut être pourvu de lèvres annulaires extérieures.

Ledit épaulement extérieur peut être en une matière plus rigide que celle dudit manchon annulaire d'étanchéité.

Au moins ledit épaulement intérieur de la partie secondaire peut être en une matière plus rigide que celle dudit manchon annulaire d'étanchéité.

Ladite bague d'étanchéité peut être destinée à créer une étanchéité entre deux conduits engagés l'un dans l'autre.

Il est également proposé un assemblage qui comprend un conduit intérieur et un conduit extérieur engagés l'un dans l'autre, ces conduits étant munis d'une bague d'étanchéité telle que revendiquée.

Ladite bague d'étanchéité est montée de sorte que ledit manchon annulaire d'étanchéité de la partie principale de la bague soit inséré entre lesdits conduits, ledit épaulement extérieur en saillie de la partie principale soit en butée contre l'extrémité du conduit extérieur entourant le conduit intérieur et ledit épaulement intérieur en saillie de la partie secondaire soit en butée contre l'extrémité du conduit intérieur engagée dans le conduit extérieur.

La portion affaiblie peut être sécable sous l'effet d'un effort axial supérieur à celui permettant l'engagement dudit manchon annulaire entre lesdits conduits.

L'extrémité du conduit intérieur peut être engagée dans la rainure de l'épaulement intérieur de la partie secondaire.

Il est également proposé un procédé d'assemblage d'un conduit intérieur, d'un conduit extérieur et d'une bague d'étanchéité telle que revendiquée.

Ce procédé comprend : monter ladite partie principale de la bague d'étanchéité autour du conduit intérieur, l'épaulement intérieur en saillie de la partie secondaire venant en butée contre l'extrémité de ce conduit intérieur, et engager, dans le conduit extérieur, la partie secondaire et le manchon annulaire de la partie principale de la bague d'étanchéité, en même temps que le conduit intérieur, jusqu'à ce que l'épaulement extérieur en saillie de la partie principale vienne en butée contre l'extrémité du tube extérieur.

Le procédé peut comprendre : poursuivre le mouvement de façon à provoquer la rupture de ladite portion sécable.

Une bague d'étanchéité et un assemblage de conduits incluant cette bague vont maintenant être décrits à titre d'exemples non limitatifs, illustrés par le dessin dans lequel :
- La figure 1 représente une coupe longitudinale d'une bague d'étanchéité ;
- La figure 2 représente une vue de côté de la bague d'étanchéité de la figure 1 ;
- La figure 3 représente une coupe longitudinale d'un conduit intérieur muni de la bague d'étanchéité de la figure 1 ;
- La figure 4 représente une coupe longitudinale d'un assemblage d'un conduit intérieur et d'un conduit extérieur, munis de la bague d'étanchéité de la figure 1, dans une position de montage ;
- La figure 5 représente une coupe longitudinale de l'assemblage de la figure 4, dans une autre position de montage ; et
- Les figures 6, 7 et 8 représentent des vues correspondant aux figures 3, 4 et 5 d'une application de la bague de la figure 1 dans un assemblage particulier.

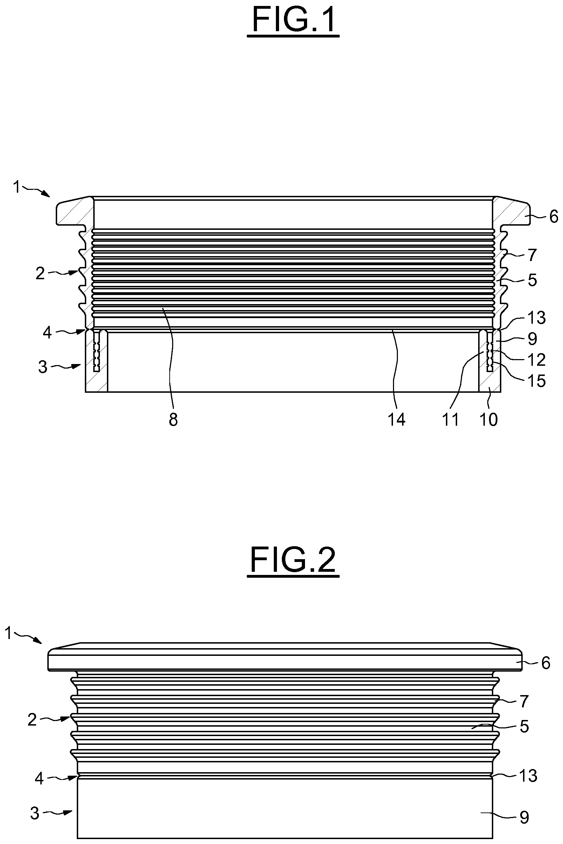

Sur les figures 1 et 2 est illustrée une bague d'étanchéité 1 qui comprend, axialement, une partie principale 2 et une partie secondaire 3, reliées par une portion affaiblie sécable 4.

La partie principale 2 comprend un manchon annulaire cylindrique 5 d'étanchéités extérieure et intérieure et un épaulement extérieur 6 prévu à l'extrémité de manchon cylindrique 5, cet épaulement étant axialement éloigné de la portion intermédiaire affaiblie sécable 4 et radialement en saillie vers l'extérieur par rapport à la portion cylindrique 5, de sorte que le manchon cylindrique 5 s'étende au moins en partie entre l'épaulement extérieur 6 et la portion affaiblie sécable 4 et que l'épaulement 5 forme un appui axial orienté du côté de la portion affaiblie 4.

Le manchon cylindrique 5 est pourvu d'une pluralité de lèvres annulaires extérieures d'étanchéité 7 en saillie, espacées axialement, l'épaulement extérieur 6 étant, radialement, en saillie par rapport à ces lèvres en saillie.

Le manchon cylindrique 5 présente, à l'intérieur, une pluralité de rainures intérieures 8, espacées axialement.

L'épaulement extérieur 6 peut s'étendre sur toute la circonférence du manchon cylindrique 5 ou peut être formé par des portions circonférentielles espacées.

La partie secondaire 3 comprend une portion cylindrique 9 qui s'étend axialement dans le prolongement de la portion cylindrique 5 et un épaulement intérieur 10 prévu à l'extrémité de cette portion annulaire 9, cet épaulement étant axialement éloigné de la portion affaiblie sécable 4 et étant radialement en saillie vers l'intérieur par rapport à la portion cylindrique 9, de sorte que l'épaulement intérieur 10 forme un appui axial orienté du côté de la portion affaiblie 4.

La partie secondaire 3 comprend en outre une portion annulaire intérieure 11 qui s'étend axialement depuis l'épaulement intérieur 9 vers la partie principale 2, de telle sorte qu'entre la portion cylindrique 9 et la portion annulaire intérieure 11 est aménagée une rainure annulaire 12 orientée axialement vers la partie principale 2.

La portion annulaire intérieure 11 peut s'étendre sur toute la circonférence de l'épaulement intérieur 10 ou peut être formée par des portions circonférentielles espacées. Dans ce dernier cas, l'épaulement annulaire intérieur 10 peut être formé par des portions circonférentielles espacées pourvues des portions circonférentielles espacées formant l'épaulement intérieur 10. Egalement, la portion cylindrique 9 peut être formée par des portions circonférentielles espacées pourvues des portions circonférentielles espacées formant l'épaulement intérieur 10.

La portion affaiblie sécable 4, de liaison entre la partie principale 2 et la partie secondaire 3, est sécable sous l'effet d'un effort axial déterminé appliqué entre la partie principale 2 et la partie secondaire 3.

Par exemple, pour cela, la portion affaiblie sécable 4 peut être de section réduite par rapport à la section du manchon cylindrique 5 de la partie principale 2 et de la portion cylindrique 9 de la partie secondaire 3. En complément ou en variante de réalisation, la portion affaiblie sécable 4 peut présenter une rainure annulaire extérieure 13 et/ou une rainure annulaire intérieure 14. La portion affaiblie sécable 4 peut présenter des fentes ou perforations radiales (non représentées) qui la traversent.

La rainure annulaire 12 peut présenter, dans l'un et/ou l'autre de ses flancs, des lèvres annulaires 15 en saillie.

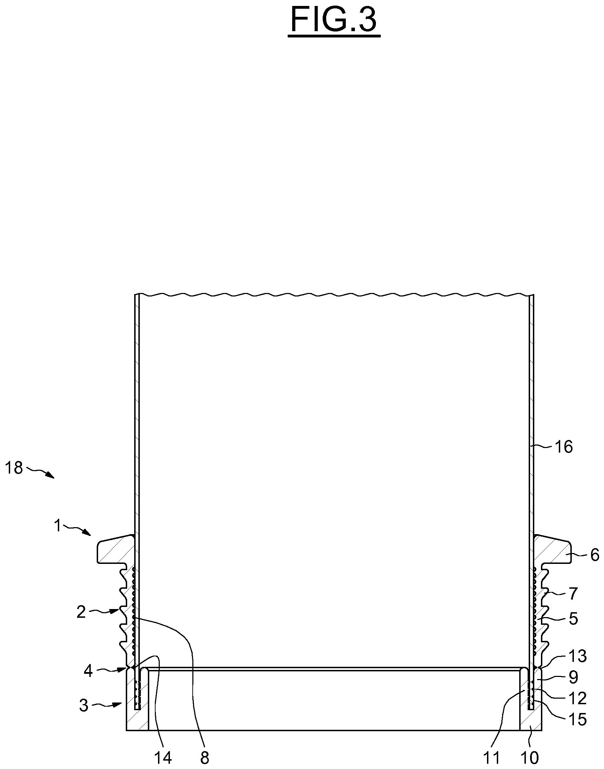

Comme illustré sur la figure 3, la bague d'étanchéité 1 peut être montée comme suit sur une portion d'extrémité d'un conduit intérieur 16 par un opérateur.

Pour cela, l'extrémité du conduit intérieur 16 est introduite axialement dans le manchon cylindrique 5 de la partie principale 2 puis dans la portion cylindrique 9 de la partie secondaire 3, en traversant la portion affaiblie sécable 4, et est engagée à l'intérieur de la rainure annulaire 12 jusqu'à venir en appui contre l'épaulement intérieur 10.

Le diamètre intérieur du manchon cylindrique 5 de la partie principale 2 et de la portion cylindrique 9 de la partie secondaire 3 est adapté pour que ce montage se produise par glissement. La section de la rainure annulaire 12 est adaptée à la section du conduit intérieur 16 pour produire un pincement de son extrémité.

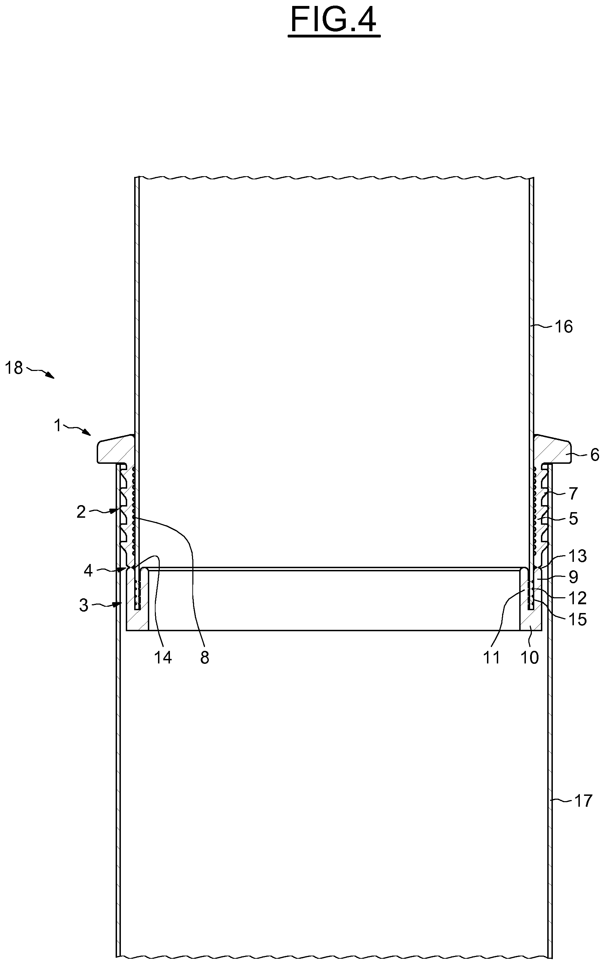

Comme illustré sur la figure 4, le conduit intérieur 16 muni de la bague d'étanchéité 1 peut être accouplé comme suit à un conduit extérieur 17 par un opérateur pour former un assemblage 18.

Pour cela, l'extrémité du conduit extérieur 17 est passée autour de la portion cylindrique 9 de la partie secondaire 3 puis est engagée par glissement autour de lèvres annulaires extérieures 7 du manchon cylindrique 5 de la partie principale d'étanchéité 2, jusqu'à ce que l'extrémité du conduit extérieur 17 vienne en appui axial contre l'épaulement extérieur 6 de la partie principale 2.

Le manchon cylindrique 5 de la partie principale d'étanchéité 2 et la portion affaiblie sécable 4 sont adaptés et dimensionnés de façon que ce montage puisse se produire par glissement sans rupture de la portion affaiblie sécable 4 et pour que le manchon cylindrique 5 de la partie principale d'étanchéité 2, interposé entre le conduit intérieur 16 et le conduit extérieur 17, établisse une étanchéité souhaitée entre ces conduits 16 et 17.

Un opérateur peut exercer un effort axial accru entre les conduits 16 et 17, dans le sens de la poursuite de l'engagement du conduit intérieur 16 dans le conduit extérieur 17, cet effort étant supérieur à celui ayant permis le montage décrit plus haut.

Cet effort axial accru engendre un effort axial de sollicitation entre la partie principale 2 de la bague 1 d'étanchéité, dont l'épaulement extérieur 6 est tenu en appui contre l'extrémité du conduit extérieur 17, et la partie secondaire 3 de la bague d'étanchéité 1, dont l'épaulement intérieur 10 est tenu en appui contre l'extrémité du conduit intérieur 16.

Comme illustré sur la figure 4, cet effort axial de sollicitation engendre la rupture de la portion affaiblie sécable 4, de telle sorte que les conduits 16 et 17 peuvent être amenés dans une position souhaitée de réglage axial l'un par rapport à l'autre de façon télescopique.

Se faisant, la partie principale 2 de la bague d'étanchéité 1 reste à sa position par rapport au conduit extérieur 17 et le conduit intérieur 16 glisse dans la portion cylindrique 5 et emmène avec lui la partie secondaire 3 de la bague d'étanchéité 1, séparée de la partie principale 2 et en appui par son épaulement intérieur 10 contre l'extrémité du conduit intérieur 16. La partie secondaire 3 de la bague d'étanchéité 1 reste solidaire du conduit intérieur 16 grâce à l'effet de pincement de ce dernier dans la rainure annulaire 12.

La bague d'étanchéité 1 peut être fabriquée en une ou plusieurs matières synthétiques par moulage.

L'épaulement extérieur 6 et la partie secondaire 4 peuvent être en une ou des matières synthétiques plus rigides que la matière constituant la portion cylindrique 5. Ainsi, les efforts nécessaires au montage décrit ci-dessus peuvent être supportés, tout en assurant l'étanchéité souhaitée.

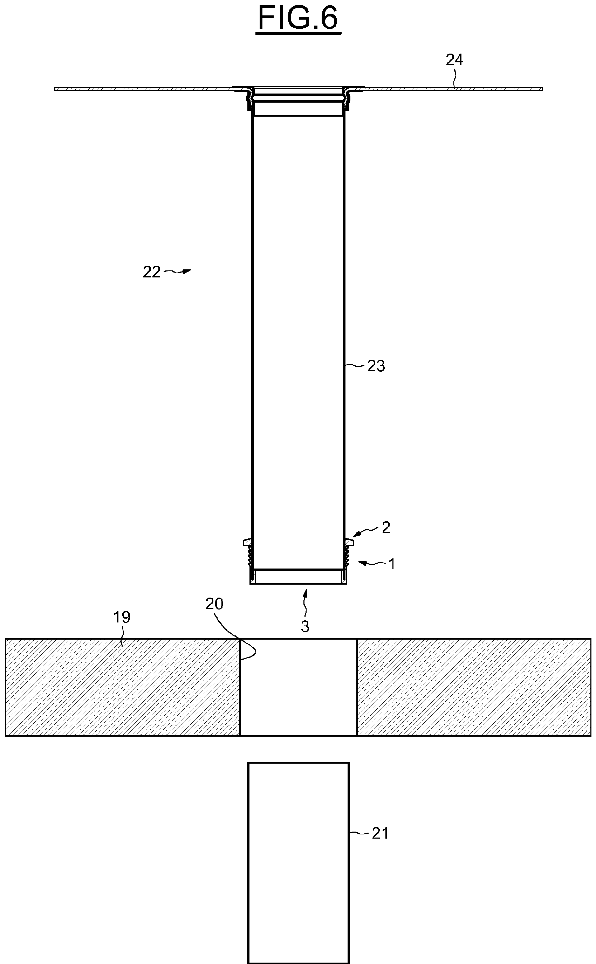

Un exemple d'application de la bague d'étanchéité 1 est illustré sur les figures 6, 7 et 8.

Une dalle horizontale 19 d'un bâtiment ou d'une terrasse, présente un passage traversant 20, au-dessous duquel est prévu un conduit vertical 21 d'évacuation par exemple des eaux pluviales. Ce conduit 21 est équivalent au conduit extérieur 17 précité.

Un dispositif de liaison 22 comprend un conduit 23 muni, à une extrémité, d'une membrane radiale 24. Ce conduit 23 est équivalent au conduit intérieur 16 précité.

Comme représenté sur la figure 6, un opérateur monte sur l'extrémité du conduit 23, opposée à la membrane 24, une bague d'étanchéité 1, conformément à ce qui a été décrit précédemment en référence à figure 3.

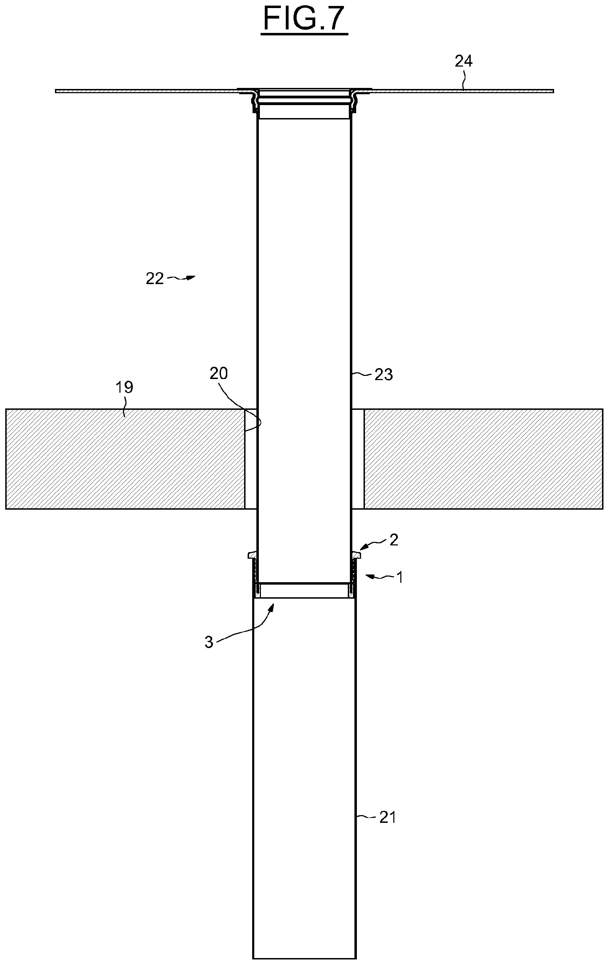

Comme représenté sur la figure 7, l'opérateur engage le conduit 23 au travers du passage traversant 20 de la dalle 19 et engage la bague d'étanchéité 1 portée par ce conduit 23 dans le conduit vertical 21, conformément à ce qui a été décrit précédemment en référence à figure 4.

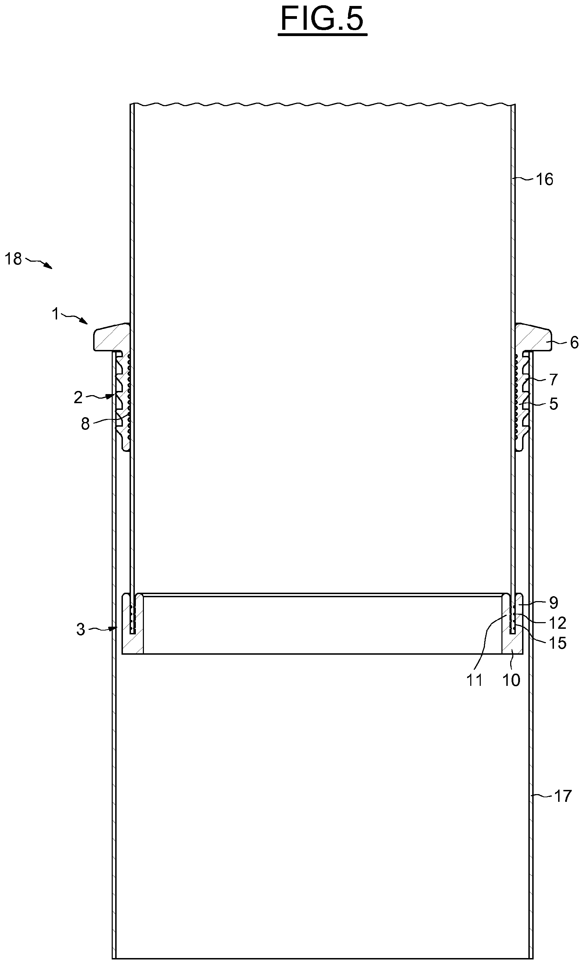

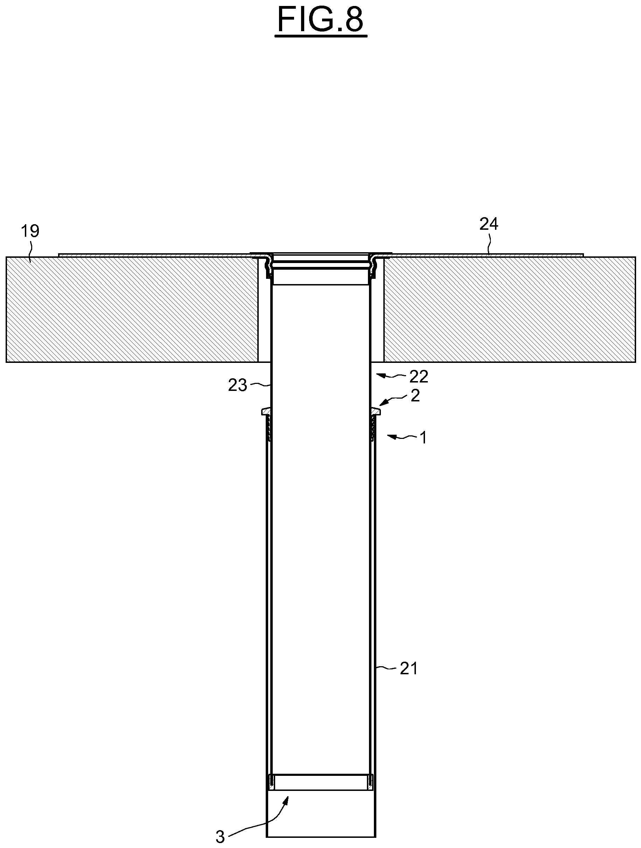

Puis, comme représenté sur la figure 8, l'opérateur poursuit le mouvement du conduit 23, conformément à ce qui a été décrit précédemment en référence à la figure 5, en provoquant la rupture de la portion sécable 4 de la bague d'étanchéité 1, jusqu'à ce que la membrane 24 vienne en appui sur la dalle 19. Après quoi, l'opérateur réalise une liaison étanche entre la membrane 24 et une étanchéité de surface de la dalle 24.

Ainsi, la bague d'étanchéité 1 établit une étanchéité entre les conduits 22 et 23, simultanément à l'opération d'accouplement de ces derniers et sans intervention complémentaire, en s'affranchissant des positions axiales relatives finales de réglage des conduits 22 et 23.

La bague d'étanchéité 1 peut être obtenue par moulage.

La bague d'étanchéité 1 peut également être obtenue par extrusion au travers d'une filière d'un profilé dont la section correspond à sa section axiale, découpage d'une portion de ce profilé, puis enroulage et soudage des extrémités de cette portion.

L'épaulement extérieur 6 peut être en une matière plus rigide que celle du manchon annulaire 5.

L'épaulement intérieur 10 de la partie secondaire 3 ou cette partie secondaire en entier peuvent être en une matière plus rigide que celle du manchon annulaire 5.

La portion affaiblie 4 peut être moins rigide que le manchon annulaire 5 et/ou que la partie secondaire 3.

La bague d'étanchéité 1 peut être en une ou des matières différentes caoutchouteuses ou en un ou des élastomères spéciaux tels que des EPDM.

## Revendications

1. Bague d'étanchéité comprenant, axialement, une partie principale (2) et une partie secondaire (3), reliées par une portion intermédiaire affaiblie (4), dans laquelle la partie principale (2) comprend un manchon annulaire d'étanchéités extérieure et intérieure (5) et un épaulement extérieur en saillie (6) d'appui axial du côté de la portion affaiblie qui est aménagé à l'extrémité du manchon annulaire d'étanchéité (5), et dans laquelle la partie secondaire (3) comprend un épaulement intérieur en saillie (10) d'appui axial du côté de la portion affaiblie,
**caractérisée en ce que** la portion intermédiaire affaiblie (4) est sécable sous l'effet d'un effort axial appliqué entre la partie principale et la partie secondaire,
et **en ce que** l'épaulement extérieur en saillie (6) de la partie principale est axialement éloigné de la portion affaiblie sécable (4).

2. Bague selon la revendication 1, dans laquelle la portion sécable (4) présente au moins une section réduite par rapport au manchon annulaire d'étanchéité (5) et/ou au moins une fente.

3. Bague selon l'une des revendications 1 et 2, dans laquelle la partie secondaire comprend une portion annulaire secondaire (9) reliée au manchon annulaire d'étanchéité (5) par ladite portion sécable (4), ledit épaulement intérieur (10) étant aménagé à l'extrémité de la portion annulaire secondaire (9), opposée à ladite portion sécable (4).

4. Bague selon la revendication 3, dans laquelle ladite portion annulaire secondaire (9) s'étend dans le prolongement dudit manchon annulaire d'étanchéité (5).

5. Bague selon l'une quelconque des revendications précédentes, dans laquelle l'épaulement intérieur (10) est pourvu d'une rainure annulaire (12) ouverte axialement du côté de la partie principale (2).

6. Bague selon l'une quelconque des revendications précédentes, dans laquelle ledit manchon annulaire d'étanchéité (5) est pourvu de lèvres annulaires extérieures (7).

7. Bague selon l'une quelconque des revendications précédentes, dans laquelle ledit épaulement extérieur (6) est en une matière plus rigide que celle dudit manchon annulaire d'étanchéité (5).

8. Bague selon l'une quelconque des revendications précédentes, dans laquelle au moins ledit épaulement intérieur (10) de la partie secondaire est en une matière plus rigide que celle dudit manchon 1 annulaire d'étanchéité (5).

9. Bague selon l'une quelconque des revendications précédentes, destinée à créer une étanchéité entre deux conduits engagés l'un dans l'autre.

10. Assemblage comprenant un conduit intérieur (16, 23) et un conduit extérieur (17, 21) engagés l'un dans l'autre, ces conduits étant munis d'une bague d'étanchéité (1) selon l'une quelconque des revendications précédentes, dans lequel ledit manchon annulaire d'étanchéité (5) de la partie principale (2) de la bague est inséré entre lesdits conduits, ledit épaulement extérieur en saillie (6) de la partie 1 principale (2) est en butée contre l'extrémité du conduit extérieur entourant le conduit intérieur et ledit épaulement intérieur en saillie (10) de la partie secondaire (3) est en butée contre l'extrémité du conduit intérieur engagée dans le conduit extérieur.

11. Assemblage selon la revendication 10, dans lequel la portion affaiblie est sécable sous l'effet d'un effort axial supérieur à celui permettant l'engagement dudit manchon annulaire entre lesdits conduits.

12. Assemblage selon l'une des revendications 10 et 11, dans lequel l'extrémité du conduit intérieur est engagée dans la rainure (12) de l'épaulement intérieur (10) de la partie secondaire (2).

13. Procédé d'assemblage d'un conduit intérieur, d'un conduit extérieur et d'une bague d'étanchéité selon l'une quelconque des revendications 1 à 9, comprenant :
monter la partie principale (2) de la bague d'étanchéité (1) autour du conduit intérieur, l'épaulement intérieur en saillie (10) de la partie secondaire (3) venant en butée contre l'extrémité de ce conduit intérieur,
engager, dans le conduit extérieur, la partie secondaire (2) et le manchon annulaire (5) de la partie principale (2) de la bague d'étanchéité (1), en même temps que le conduit intérieur, jusqu'à ce que l'épaulement extérieur en saillie (6) de la partie principale (2) vienne en butée contre l'extrémité du tube extérieur.

14. Procédé selon la revendication 13, comprenant : poursuivre le mouvement de façon à provoquer la rupture de ladite portion sécable (4).

## Patentansprüche

1. Dichtungsring, axial umfassend einen Hauptteil (2) und einen sekundären Teil (3), die durch einen geschwächten Übergangsabschnitt (4) verbunden sind, wobei der Hauptteil (2) eine ringförmige Außen- und Innendichtungshülse (5) und einen hervorstehenden äußeren Absatz (6) zur axialen Abstützung auf der Seite des geschwächten Abschnitts umfasst, der am Ende der ringförmigen Dichtungshülse (5) eingerichtet ist, und wobei der sekundäre Teil (3) einen hervorstehenden inneren Absatz (10) zur axialen Abstützung auf der Seite des geschwächten Abschnitts umfasst,
**dadurch gekennzeichnet, dass** der geschwächte Übergangsabschnitt (4) unter der Wirkung einer axialen Kraft, die zwischen dem Hauptteil und dem sekundären Teil ausgeübt wird, trennbar ist,
und dass der vom Hauptteil hervorstehende äußere Absatz (6) von dem trennbaren geschwächten Abschnitt (4) axial entfernt ist.

2. Ring nach Anspruch 1, wobei der trennbare Abschnitt (4) mindestens einen in Bezug auf die ringförmige Dichtungshülse (5) reduzierten Querschnitt und/oder mindestens einen Schlitz aufweist.

3. Ring nach einem der Ansprüche 1 und 2, wobei der sekundäre Teil einen sekundären ringförmigen Abschnitt (9) umfasst, der mit der ringförmigen Dichtungshülse (5) durch den trennbaren Abschnitt (4) verbunden ist, wobei der innere Absatz (10) am Ende des sekundären ringförmigen Abschnitts (9) gegenüber dem trennbaren Abschnitt (4) eingerichtet ist.

4. Ring nach Anspruch 3, wobei sich der sekundäre ringförmige Abschnitt (9) in Verlängerung der ringförmigen Dichtungshülse (5) erstreckt.

5. Ring nach einem der vorangehenden Ansprüche, wobei der innere Absatz (10) mit einer ringförmigen Nut (12) versehen ist, die auf der Seite des Hauptteils (2) axial offen ist.

6. Ring nach einem der vorangehenden Ansprüche, wobei die ringförmige Dichtungshülse (5) mit äußeren ringförmigen Lippen (7) versehen ist.

7. Ring nach einem der vorangehenden Ansprüche, wobei der äußere Absatz (6) aus einem Material ist, das starrer als das Material der ringförmigen Dichtungshülse (5) ist.

8. Ring nach einem der vorangehenden Ansprüche, wobei mindestens der innere Absatz (10) des sekundären Teils aus einem Material ist, das starrer als das Material der ringförmigen Dichtungshülse (5) ist.

9. Ring nach einem der vorangehenden Ansprüche, der zur Herstellung einer Dichtigkeit zwischen den zwei ineinander eingefügten Röhren bestimmt ist.

10. Anordnung, umfassend eine innere Röhre (16, 23) und eine äußere Röhre (17, 21), die ineinander eingefügt sind, wobei diese Röhren mit einem Dichtungsring (1) nach einem der vorangehenden Ansprüche versehen sind, wobei die ringförmige Dichtungshülse (5) des Hauptteils (2) des Rings zwischen den Röhren eingesetzt ist, wobei der hervorstehende äußere Absatz (6) des Hauptteils (2) in Anschlag auf dem Ende der äußeren Röhre ist, die die innere Röhre umgibt, und der hervorstehende innere Absatz (10) des sekundären Teils (3) in Anschlag auf dem Ende der inneren Röhre ist, die in die äußere Röhre eingefügt ist.

11. Anordnung nach Anspruch 10, wobei der geschwächte Abschnitt unter der Wirkung einer axialen Kraft trennbar ist, die größer ist als die Kraft, die das Einfügen der ringförmigen Hülse zwischen den Röhren gestattet.

12. Anordnung nach einem der Ansprüche 10 und 11, wobei das Ende der inneren Röhre in die Nut (12) des inneren Absatzes (10) des sekundären Teils (2) eingefügt ist.

13. Verfahren zur Anordnung einer inneren Röhre, einer äußeren Röhre und eines Dichtungsrings nach einem der Ansprüche 1 bis 9, umfassend:
Anbringen des Hauptteils (2) des Dichtungsrings (1) um die innere Röhre, wobei der hervorstehende innere Absatz (10) des sekundären Teils (3) in Anschlag auf das Ende dieser inneren Röhre kommt,
Einfügen, in die äußere Röhre, des sekundären Teils (2) und der ringförmigen Hülse (5) des Hauptteils (2) des Dichtungsrings (1) zur selben Zeit wie die innere Röhre, bis der hervorstehende äußere Absatz (6) des Hauptteils (2) in Anschlag auf das Ende des äußeren Rohrs kommt.

14. Verfahren nach Anspruch 13, umfassend: Fortsetzen der Bewegung derart, dass der Bruch des trennbaren Abschnitts (4) verursacht wird.

## Claims

1. Sealing ring comprising, axially, a main part (2) and a secondary part (3), connected by a weakened intermediate portion (4), wherein the main part (2) comprises annular exterior and interior sealing sleeves (5) and a projecting exterior shoulder (6) bearing axially on the side of the breakable portion (4), arranged at the end of the annular sealing sleeve (5), and wherein the secondary part (3) comprises a projecting interior shoulder (10) bearing axially on the side of the breakable portion (4), **characterized in that** the weakened intermediate portion (4) can be broken by an axial force applied between the main part and the secondary part, and **in that** the projecting exterior shoulder (6) of the main part is axially distanced from the breakable portion (4).

2. Sealing ring according to claim 1, in which the breakable portion (4) has at least one section reduced relative to the annular sealing sleeve (5) and/or at least one slot.

3. Sealing ring according to claim 1 or 2, in which the secondary part comprises a secondary annular portion (9) connected to the sealing annular sleeve (5) by said breakable portion (4), said interior shoulder (10) being arranged at the end of the secondary annular portion (9) opposite said breakable portion (4).

4. Sealing ring according to claim 3, in which said secondary annular portion (9) extends in line with said sealing annular sleeve (5).

5. Sealing ring according to any of the preceding claims, in which the interior shoulder (10) is provided with an annular groove (12) open axially on the side of the main part (2).

6. Sealing ring according to any of the preceding claims, in which said annular sealing sleeve (5) is provided with annular exterior lips (7).

7. Sealing ring according to any of the preceding claims, in which said exterior shoulder (6) is in a material more rigid than that of said annular sealing sleeve (5).

8. Sealing ring according to any of the preceding claims, in which at least said interior shoulder (10) of the secondary part is in a material more rigid than that of said annular sealing sleeve (5).

9. Sealing ring according to any of the preceding claims, intended to create a seal between two pipes engaged one in the other.

10. An assembly comprising an interior duct (16, 23) and an exterior duct (17, 21) engaged one in the other, these ducts being provided with a sealing ring (1) according to any of the preceding claims, in which said annular sealing sleeve (5) of the main part (2) of the ring is inserted between said ducts, said projecting exterior shoulder (6) of the main part (2) is abutted against the end of the exterior duct around the interior duct and said projecting interior shoulder (10) of the secondary part (3) is abutted against the end of the exterior tube engaged in the exterior duct.

11. Assembly according to claim 10, in which the weakened portion can be broken under an axial force greater than that allowing the engagement of said annular sleeve between said ducts.

12. Assembly according to claim 10 or 11, in which the end of the interior duct is engaged in the groove (12) of the interior shoulder (10) of the secondary part (2).

13. A method of assembling an interior duct, an exterior duct and a sealing ring according any of the preceding claims 1 to 9, comprising:
mounting the main part (2) of the sealing ring (1) around the interior duct, the projecting interior shoulder (10) of the secondary part (3) coming to abut against the end of this interior duct,
engaging in the exterior duct the secondary part (2) and the annular sleeve (5) of the main part (2) of the sealing ring (1), at the same time as the interior duct, until the projecting exterior shoulder (6) of the main part (2) comes to abut against the end of the exterior tube.

14. Method according to claim 13, comprising: continuing the movement so as to cause said breakable portion (4) to break.
